# EUROPEAN PATENT APPLICATION

(11) **EP 4 852 179 A1**
(43) Date of publication of application: **09.12.2026**
(21) Application number: 26752068.2
(22) Date of filing: 29.01.2026
(51) Int. Cl.: H01M 50/256, H01M 50/267, H01M 10/04, B65D 25/10, B65D 71/70

(54) **BATTERY CELL TRANSPORT TRAY**

(30) Priority: 07.02.2025 KR 20250015860
(71) Applicant: LG Energy Solution, Ltd., Seoul 07335 (KR)
(72) Inventor: PARK, Hyun Young, Daejeon 34122 (KR); JEON, Hyang Sun, Daejeon 34122 (KR); KIM, Se Jong, Daejeon 34122 (KR)
(74) Representative: Goddar, Heinz J.
(86) International application number: PCT/KR2026/001784
(87) International publication number: WO 2026/168879

(57) **Abstract**

According to exemplary embodiments, a battery cell transfer tray is provided. The battery cell transfer tray includes: a bottom part for accommodating battery cells; a first side wall standing upward from one end of the bottom part; a second side wall facing the first side wall and standing upward from the other end of the bottom part; and reinforcing side walls standing upward from lateral ends of the bottom part between the first side wall and the second side wall, and installed at a lower height than the first side wall and the second side wall. The first side wall and the second side wall may each further include a plurality of opening handles at upper parts thereof.

## Description

### [Technical Field]

The present disclosure relates to a battery cell transfer tray, and more particularly, to a transfer tray applicable to battery cells of various sizes. This application claims the benefit of priority to Korean Patent Application No. 10-2025-0015860, filed on February 7, 2025, the disclosure of which is incorporated herein by reference.

### [Background]

Lithium secondary batteries are freely chargeable and dischargeable, have a very low self-discharge rate, and have a high energy density, so demand for them is rapidly increasing in various fields, such as energy sources. Among secondary batteries, pouch-type batteries can be manufactured in various shapes, and thus are used in various electronic and mechanical products, such as automotive applications and mobile devices.

Such lithium secondary batteries are loaded into a single tray with a plurality of battery cells accommodated therein during the manufacturing process or when transporting finished products, and are then transferred to the subsequent process or to a delivery destination. At this time, the tray is inevitably restricted by the size of the accommodated battery cells due to its structural design. For example, in the case of battery cells applied to a PHEV-G (Plug-in Hybrid Electric Vehicle-G) model, various sizes of battery cells exist, such as a length of 540 mm or 740 mm in the longitudinal direction. Since the existing transfer tray has a hexahedral shape provided with a handle or a boundary portion as shown in Patent Document 1, transfer trays suitable for the size of each battery cell model are required.

### [Summary]

### [Technical Problem]

The technical problem to be solved by the technical idea of the present disclosure is to provide a transfer tray applicable to battery cells of various sizes.

### [Technical Solution]

According to exemplary embodiments for solving the above-described problem, a battery cell transfer tray is provided. The battery cell transfer tray includes: a bottom part for storing battery cells;

a first side wall standing upward from one end of the bottom part; a second side wall facing the first side wall and standing upward from the other end of the bottom part; and reinforcing side walls standing upward from lateral ends of the bottom part between the first side wall and the second side wall, and installed at a lower height than the first side wall and the second side wall, wherein the first side wall and the second side wall may each further include a plurality of opening handles at upper parts thereof.

The first side wall further includes a first side wall reinforcing part thicker than a thickness of the first side wall between the plurality of opening handles.

The second side wall further includes a second side wall reinforcing part thicker than a thickness of the second side wall between the plurality of opening handles.

The first side wall includes a first coupling protruding part at an upper end thereof, and the bottom part may include, at a lower end thereof, a first coupling accommodating part having a shape that can be engaged with the first coupling protruding part.

The first coupling protruding part may be formed as a step in which an inner peripheral surface thereof is lower than an outer peripheral surface of an upper surface of the first side wall, and the first coupling accommodating part may be formed as a step in which an inner peripheral surface thereof is higher than an outer peripheral surface of a lower surface of the bottom part.

The second side wall includes a second coupling protruding part at an upper end thereof, and the bottom part may include, at a lower end thereof, a second coupling accommodating part having a shape that can be engaged with the second coupling protruding part.

The second coupling protruding part may be formed as a step in which an inner peripheral surface thereof is lower than an outer peripheral surface of an upper surface of the second side wall, and the second coupling accommodating part may be formed as a step in which an inner peripheral surface thereof is higher than an outer peripheral surface of a lower surface of the bottom part.

The first side wall reinforcing part includes a first sub-coupling protruding part at an upper end thereof, and the bottom part may include, at a lower end thereof, a first sub-coupling accommodating groove having a shape that can be engaged with the first sub-coupling protruding part.

The second side wall reinforcing part includes a second sub-coupling protruding part at an upper end thereof, and the bottom part may include, at a lower end thereof, a second sub-coupling accommodating groove having a shape that can be engaged with the second sub-coupling protruding part.

The bottom part, the first side wall, the second side wall, and the reinforcing side walls constitute an outer frame, and an inner frame capable of aligning the battery cells may be installed at the bottom part of the outer frame.

The outer surfaces of the outer frame may be provided with a plurality of lattice-patterned reinforcing ribs.

The outer frame may be manufactured as a single injection-molded product.

Both side faces of the outer frame defined by the first side wall, the second side wall, and the reinforcing side walls may be open.

A height of the reinforcing side walls is lower than a distance from electrodes of the battery cell to the bottom part.

The bottom part may include a plurality of opening parts.

### [Advantageous Effects]

According to exemplary embodiments of the present disclosure, a tray suitable for transferring battery cells of various sizes or models can be provided through a fundamental structural change to the battery cell transfer tray. Accordingly, even in a manufacturing line of secondary batteries producing various models, the same transfer tray can be utilized without having to alter or remodel the structure of the tray, which is advantageous in terms of cost.

The effects obtainable in the exemplary embodiments of the present disclosure are not limited to the effects mentioned above, and other effects not mentioned can be clearly derived and understood by those skilled in the art to which the exemplary embodiments of the present disclosure pertain from the following description. That is, unintended effects according to the implementation of the exemplary embodiments of the present disclosure may also be derived by those skilled in the art from the exemplary embodiments of the present disclosure.

### [Brief Description of the Drawings]

FIG. 1 is a perspective view of a battery cell transfer tray according to exemplary embodiments.
FIG. 2 is an enlarged perspective view of portion A in FIG. 1.
FIG. 3 is a perspective view showing the lower surface of the battery cell transfer tray of FIG. 1.
FIG. 4 is an enlarged perspective view of portion B in FIG. 3.
FIG. 5 is a bottom view of FIG. 1.
FIG. 6 is a perspective view of a transfer tray in which battery cell is stored.
FIG. 7 is a schematic view of a battery cell.
FIG. 8 is a perspective view of an inner frame of the tray.
FIG. 9 shows a state in which two battery cell transfer trays according to the present disclosure are stacked in upper and lower two layers.

### [Best Mode for Carrying Out the Invention]

Hereinafter, preferred embodiments of the present disclosure will be described in detail with reference to the accompanying drawings. Prior to this, terms or words used in the present specification and claims should not be construed as being limited to ordinary or dictionary meanings, but should be interpreted with meanings and concepts consistent with the technical idea of the present disclosure based on the principle that the inventor may appropriately define the concept of a term in order to describe his/her own invention in the best way.

Therefore, the embodiments described in the present specification and the configurations shown in the drawings are only the most preferred embodiments of the present disclosure and do not represent all of the technical ideas of the present disclosure. Accordingly, it should be understood that various equivalents and modifications that can substitute therefor may exist at the time of filing this application.

In addition, in describing the present disclosure, when it is determined that a detailed description of a related known configuration or function may obscure the gist of the present disclosure, the detailed description thereof will be omitted.

Since the embodiments of the present disclosure are provided to more completely explain the present disclosure to those skilled in the art, the shapes and sizes of components in the drawings may be exaggerated, omitted, or schematically illustrated for clearer description. Accordingly, the size or ratio of each component does not entirely reflect the actual size or ratio.

### (First Embodiment)

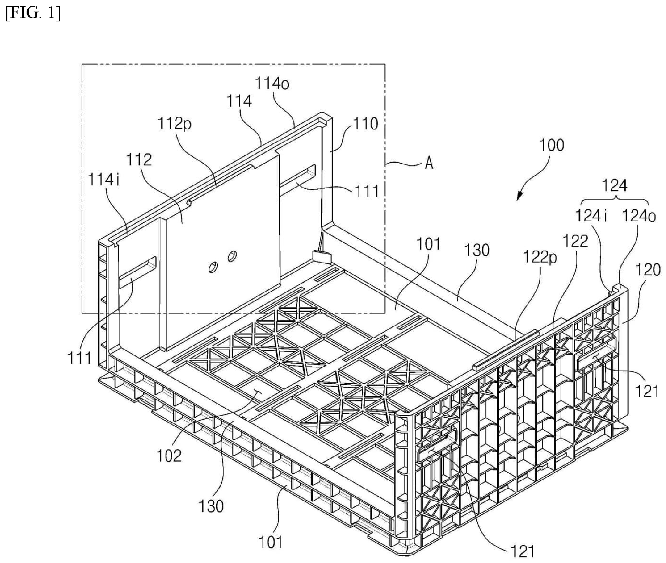

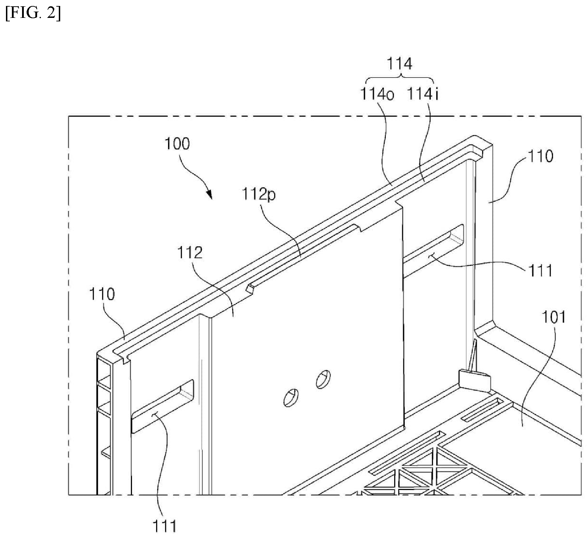

FIG. 1 is a perspective view of a battery cell transfer tray 100 according to exemplary embodiments, and FIG. 2 is an enlarged perspective view of portion A in FIG. 1.

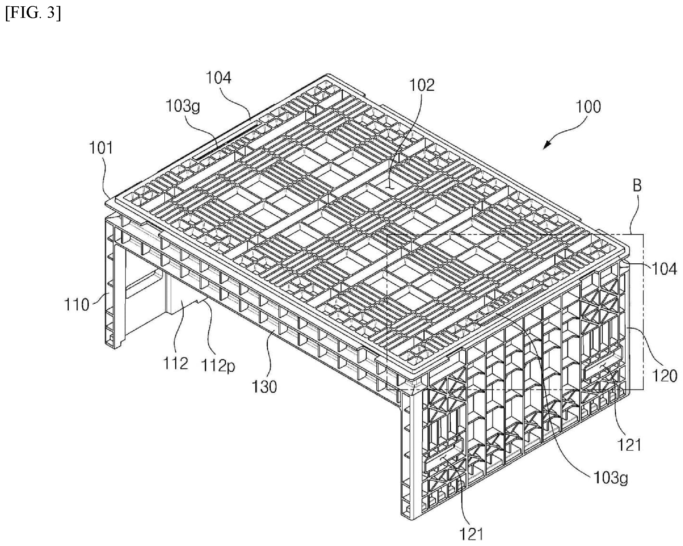

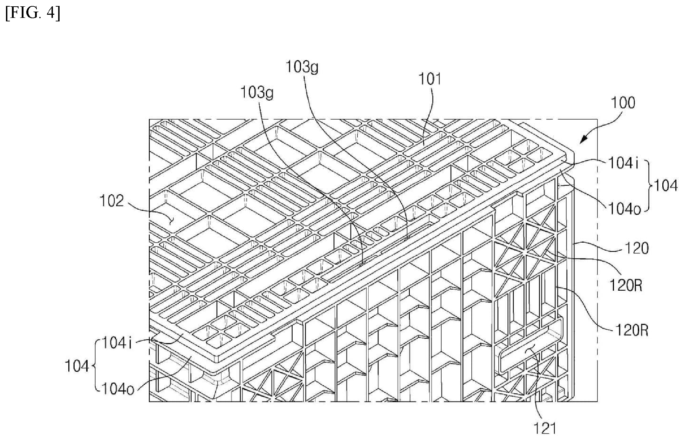

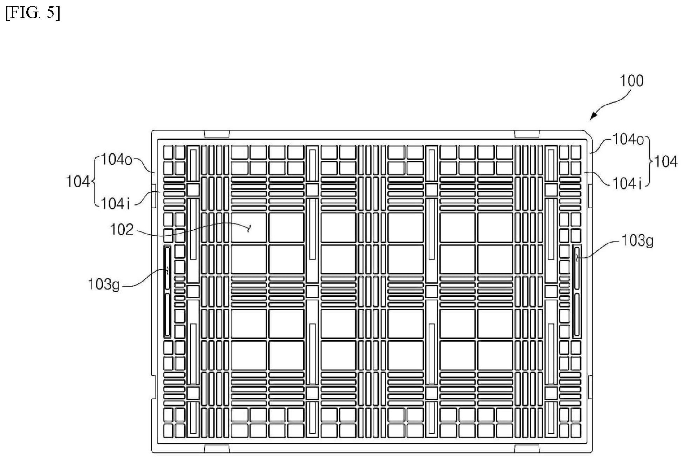

FIG. 3 is a perspective view showing the lower surface of the battery cell transfer tray 100 of FIG. 1, FIG. 4 is an enlarged perspective view of portion B in FIG. 3, and FIG. 5 is a bottom view of FIG. 1.

Referring to FIGS. 1 to 5, the battery cell transfer tray 100 according to the present embodiments includes a bottom part 101 for accommodating battery cells 10, a first side wall 110 and a second side wall 120 facing each other and standing upward from both ends of the bottom part 101, and reinforcing side walls 130 installed between the first side wall 110 and the second side wall 120.

The bottom part 101, the first side wall 110, the second side wall 120, and the reinforcing side walls 130 of the battery cell transfer tray 100 constitute an outer frame of the transfer tray 100. The outer frame may form the overall external shape of the battery cell transfer tray 100.

FIGS. 1 to 5 actually show only the outer frame of the transfer tray 100. In the present specification, the outer frame may be a part of the transfer tray 100.

The outer frame may have a plurality of rib structures formed on its outer surface to prevent shape deformation due to temperature changes, physical impacts, and the like. The outer wall of the outer frame can improve the mechanical strength of the outer frame through the rib structures, and can reduce weight to improve the convenience of transfer and storage, and reduce manufacturing costs.

The outer frame may be formed of an electrically insulating material so as not to electrically affect the charging and discharging process of the batteries stored in the internal space. Although not limited thereto, it may include, for example, a polymer or rubber material.

The first side wall 110 of the battery cell transfer tray 100 stands upward from one end of the bottom part 101, and the second side wall 120 stands upward from the other end of the bottom part 101 facing the first side wall 110.

Reinforcing side walls 130 stand upward at both lateral ends of the bottom part 101 between the first side wall 110 and the second side wall 120. The reinforcing side walls 130 stand upward from the lower surface of the bottom part 101 and support lower parts of the first side wall 110 and the second side wall 120. The reinforcing side walls 130 are installed at a height much lower than the first side wall 110 and the second side wall 120. The height of the reinforcing side walls 130 may be formed to be low so as not to come into contact with the lengthwise portions of the battery cell 10.

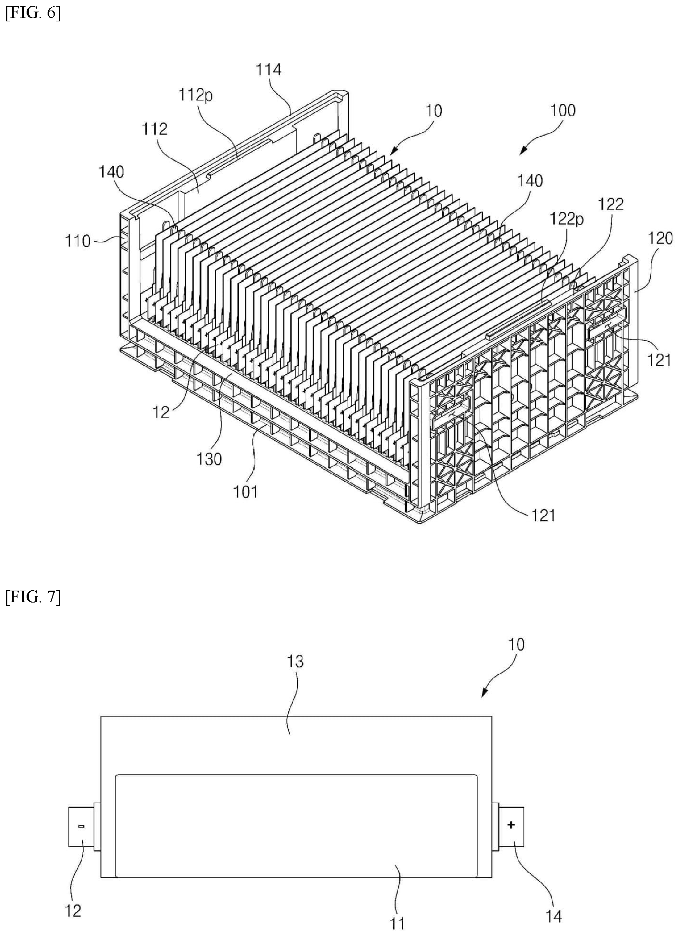

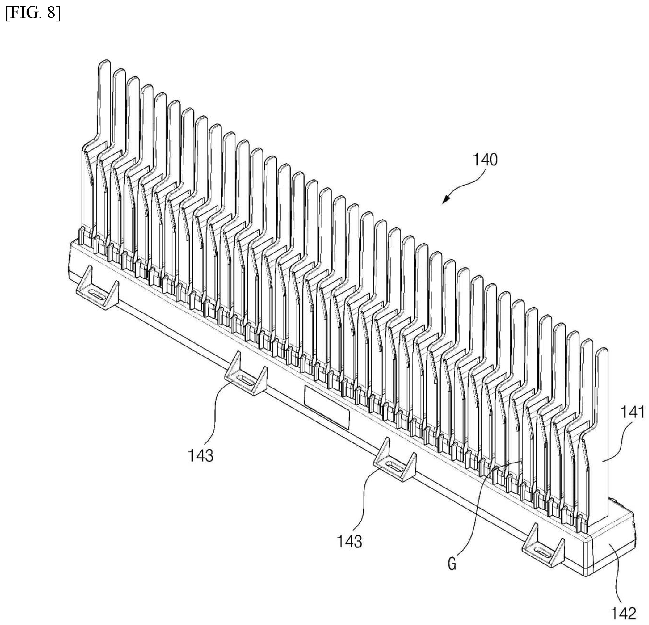

FIG. 6 is a perspective view of the transfer tray 100 in which the inner frame 140 with the battery cells 10 aligned therein is stored, FIG. 7 is a schematic view of the battery cell 10, and FIG. 8 is a perspective view of the inner frame 140 of the transfer tray 100.

FIG. 6 shows a state in which the battery cells 10 are aligned in the inner frame 140, and the inner frame 140 is installed at and stored in the bottom part 101 of the transfer tray 100.

As shown in FIG. 7, the battery cell 10 includes a cell case 11, in which an electrode assembly including electrodes 12 and 14 (i.e., a negative electrode 12 and a positive electrode 14) and a separator interposed between the negative electrode 12 and the positive electrode 14 is embedded, and a pouch part 13.

A plurality of inner frames 140 may be provided, and a plurality of partition plates 141 may be arranged at predetermined spacings G along the longitudinal direction of the inner frame 140. The plurality of battery cells 10 may be arranged at the predetermined spacing G between each partition plate 141 and an adjacent partition plate 141. The partition plates 141 may be stably supported by standing on a support part 142. The inner frame 140 may be fastened at a fastening part 143 by a fastening unit such as a bolt and a nut, and mounted on the bottom part 101.

In the battery cell transfer tray 100, both side faces of the outer frame defined by the first side wall 110, the second side wall 120, and the reinforcing side walls 130 may be open. Since the transfer tray 100 according to the present embodiment has a structure in which both side faces of the tray 100 are open, the alignment of the battery cells 10 is not hindered by the lengthwise portions, such as the electrodes 12 and 14, so more space for arranging the battery cells 10 can be secured, and the tray is applicable to battery cells 10 of various sizes.

For example, in the case of battery cells of a PHEV-G (Plug-in Hybrid Electric Vehicle-G) model, in order to manufacture battery cells having a longitudinal-direction size of 540 mm or 740 mm, a tray must be prepared for each size. However, the transfer tray 100 of the present disclosure can accommodate both models. To this end, in the transfer tray 100 of the present disclosure, the height of the reinforcing side wall 130 may be actually formed to be lower than a distance from the electrodes 12 and 14 of the battery cell 10 to the bottom part 101.

The battery cell transfer tray 100 can store a plurality of battery cells 10 aligned in its internal space. The stored battery cells 10 are configured to be transferred at one time, and the stored battery cells 10 are repeatedly charged and discharged in a formation process for activating the battery cells 10. The battery cell transfer tray 100 in which the battery cells 10 are stored can be transferred by a user or through a conveyor.

In the exemplary embodiment, since both side faces of the outer frame of the battery cell transfer tray 100 are open, there is a concern that the first side wall 110 and the second side wall 120 may spread apart, so it is necessary to strengthen the support of the first side wall 110 and the second side wall 120. To this end, the outer surfaces of the outer frame of the transfer tray 100 may be provided with a plurality of lattice-patterned reinforcing ribs 120R. The bottom part 101 may be provided with a plurality of opening parts 102 in order to promote heat dissipation and weight reduction. In addition, the outer frame including the bottom part 101, the first side wall 110, the second side wall 120, and the reinforcing side walls 130 may be manufactured as a single injection-molded product.

A plurality of opening handles 111, 111 may be provided at both upper side parts of the first side wall 110 to facilitate transportation or handling of the transfer tray 100 by a user or the like. Likewise, a plurality of opening handles 121, 121 may be provided at both upper side parts of the second side wall 120. The opening handles 111, 121 of the first side wall 110 and the second side wall 120 may have the same shape. The opening handles 111, 121 of the first side wall 110 and the second side wall 120 may have various shapes as long as they facilitate handling of the transfer tray 100. In the present embodiment, an example in which two opening handles 111, 121 of the same shape are formed on each of the first side wall 110 and the second side wall 120 is shown, but the shape and number thereof are not limited thereto.

In the case of the existing transfer tray exemplified in Patent Document 1, a handle or a boundary part connecting the upper parts between the first side wall and the second side wall is provided. However, in the battery cell transfer tray 100 according to the present embodiment, such a handle or boundary part is omitted, so both side faces of the outer frame are open. For this reason, in the transfer tray 100 according to the present embodiment, reinforcing parts 112 and 122 may be further provided on both side walls 110 and 120 to prevent the side walls 110 and 120 from spreading apart.

The first side wall 110 may further include a first side wall reinforcing part 112 thicker than the thickness of the first side wall 110 between the plurality of opening handles 111, 111.

Likewise, the second side wall 120 may further include a second side wall reinforcing part 122 thicker than the thickness of the second side wall 120 between the plurality of opening handles 121, 121.

By providing the first side wall reinforcing part 112 and the second side wall reinforcing part 122, it is possible to greatly prevent the first side wall 110 and the second side wall 120 from spreading apart.

### (Second Embodiment)

The battery cell transfer tray 100 according to the present disclosure may be transferred one by one, but is generally stacked in multiple tiers and transferred.

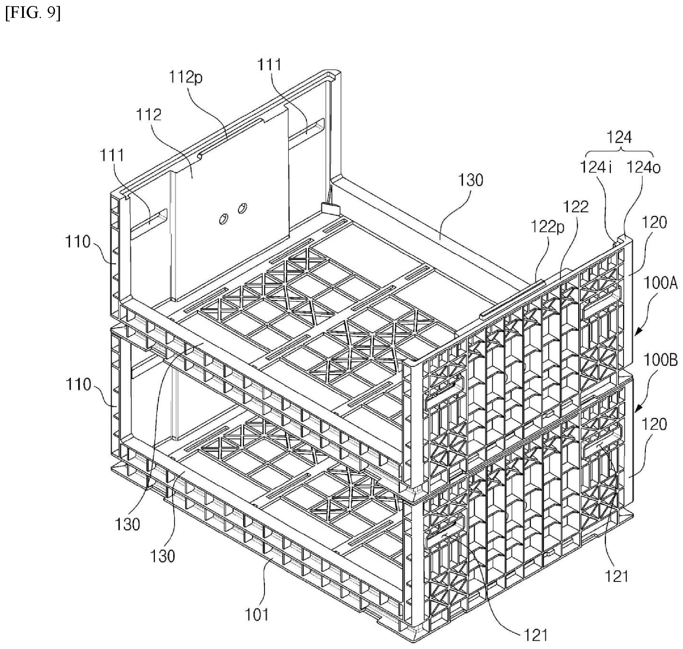

FIG. 9 shows a state in which two battery cell transfer trays 100A and 100B according to the present disclosure are stacked in upper and lower two layers.

Referring to FIG. 9 together with FIGS. 1 to 6, since the configuration of each of the battery cell transfer trays 100A and 100B includes the first side wall 110, the second side wall 120, the bottom part 101, the reinforcing side walls 130, 130, and the inner frame 140, similarly to the battery cell transfer tray 100 described in the first embodiment, the redundant description thereof will be omitted.

However, when the battery cell transfer trays 100 are stacked in multiple tiers, preventing separation between the upper and lower trays 100A and 100B becomes very important. In the present embodiment, an anti-separation structure is provided to prevent separation between the transfer trays.

Specifically, referring to FIGS. 2, 4, and 6, the first side wall 110 of the transfer tray 100 includes a first coupling protruding part 114 at its upper end. In addition, the bottom part 101 may include, at its lower end, a first coupling accommodating part 104 having a shape that can be engaged with the first coupling protruding part 114. By this coupling structure, the first coupling protruding part 114 provided on the first side wall 110 of the lower transfer tray 100B can be engaged with the first coupling accommodating part 104 formed on the bottom part 101 on the first side wall 110 side of the upper transfer tray 100A.

More specifically, as shown in FIG. 2, the first coupling protruding part 114 may be formed as a step in which the inner peripheral surface 114i thereof is lower than the outer peripheral surface 114o of the upper surface of the first side wall 110. Conversely, as shown in FIGS. 3 and 4, the first coupling accommodating part 104 may be formed as a step in which the inner peripheral surface 104i thereof is higher than the outer peripheral surface 104o of the lower surface of the bottom part 101. By this coupling structure, the outer peripheral surface 114o of the first coupling protruding part 114 formed on the first side wall 110 of the lower transfer tray 100B can be engaged with the outer peripheral surface 104o of the first coupling accommodating part 104 provided on the bottom part 101 on the first side wall 110 side of the upper transfer tray 100A, and the inner peripheral surface 114i of the first coupling protruding part 114 formed on the first side wall 110 of the lower transfer tray 100B can be engaged with the inner peripheral surface 104i of the first coupling accommodating part 104 provided on the bottom part 101 on the first side wall 110 side of the upper transfer tray 100A.

Likewise, referring to FIGS. 1 to 4, the second side wall 120 may include a second coupling protruding part 124 at its upper end, and the bottom part 101 may include, at its lower end, a second coupling accommodating part 104 having a shape that can be engaged with the second coupling protruding part 124. By this coupling structure, the second coupling protruding part 124 provided on the second side wall 120 of the lower transfer tray 100B can be engaged with the second coupling accommodating part 104 formed on the bottom part 101 on the second side wall 120 side of the upper transfer tray 100A.

Specifically, as shown in FIG. 1, the second coupling protruding part 124 may be formed as a step in which the inner peripheral surface 124i thereof is lower than the outer peripheral surface 124o of the upper surface of the second side wall 120. Conversely, as shown in FIG. 4, the second coupling accommodating part 104 may be formed as a step in which the inner peripheral surface 104i thereof is higher than the outer peripheral surface 104o of the lower surface of the bottom part 101. By this coupling structure, the outer peripheral surface 124o of the second coupling protruding part 124 formed on the second side wall 120 of the lower transfer tray 100B can be engaged with the outer peripheral surface 104o of the second coupling accommodating part 104 provided on the bottom part 101 on the second side wall 120 side of the upper transfer tray 100A, and the inner peripheral surface 124i of the second coupling protruding part 124 formed on the second side wall 120 of the lower transfer tray 100B can be engaged with the inner peripheral surface 104i of the second coupling accommodating part 104 provided on the bottom part 101 on the second side wall 120 side of the upper transfer tray 100A.

In addition, the transfer tray 100 according to the present embodiment not only prevents separation between the stacked transfer trays 100A and 100B by the first and second coupling protruding parts 114 and 124 and the first and second coupling accommodating parts 104 and 104, but may further include a sub-coupling structure.

For example, referring to FIGS. 1 to 6 and FIG. 9, a first sub-coupling protruding part 112p may be provided at the upper end of the first side wall reinforcing part 112 for reinforcing the first side wall 110 of the transfer tray 100. In addition, the bottom part 101 may include, at its lower end, a first sub-coupling accommodating groove 103g having a shape that can be engaged with the first sub-coupling protruding part 112p. By this sub-coupling structure, the first sub-coupling protruding part 112p provided on the first side wall 110 of the lower transfer tray 100B can be engaged with the first sub-coupling accommodating groove 103g formed on the bottom part 101 on the first side wall 110 side of the upper transfer tray 100A.

Likewise, a second sub-coupling protruding part 122p may be provided at the upper end of the second side wall reinforcing part 122 for reinforcing the second side wall 120 of the transfer tray 100. In addition, the bottom part 101 may include, at its lower end, a second sub-coupling accommodating groove 103g having a shape that can be engaged with the second sub-coupling protruding part 122p. By this sub-coupling structure, the second sub-coupling protruding part 122p provided on the second side wall 120 of the lower transfer tray 100B can be engaged with the second sub-coupling accommodating groove 103g formed on the bottom part 101 on the second side wall 120 side of the upper transfer tray 100A.

The transfer tray 100 according to the present embodiment illustrates a coupling structure by the first and second coupling protruding parts 114 and 124 and the first and second coupling accommodating parts 104 and 104, and a sub-coupling structure by the first and second sub-coupling protruding parts 112p and 122p and the first and second sub-coupling accommodating grooves 103g and 103g. However, in addition to such a coupling structure or sub-coupling structure, separation prevention between the stacked transfer trays 100A and 100B can be promoted through various types of connecting structures.

In the foregoing, the present disclosure has been described in more detail through the drawings and embodiments. However, since the configurations described in the drawings or embodiments described in the present specification are only one embodiment of the present disclosure and do not represent all of the technical ideas of the present disclosure, it should be understood that there may be various equivalents and modifications that can substitute therefor at the time of filing this application.
10: Battery cell
100, 100A, 100B: Battery cell transfer tray
101: Bottom part
110: First side wall
112: First side wall reinforcing part
114: First coupling protruding part
120: Second side wall
122: Second side wall reinforcing part
124: Second coupling protruding part
130: Reinforcing side wall
140: Inner frame

## Claims

1. A battery cell transfer tray comprising:
a bottom part for storing battery cells;
a first side wall standing upward from one end of the bottom part;
a second side wall facing the first side wall and standing upward from the other end of the bottom part; and
reinforcing side walls standing upward from lateral ends of the bottom part between the first side wall and the second side wall, and installed at a lower height than the first side wall and the second side wall, wherein
the first side wall and the second side wall each further comprise a plurality of opening handles at upper parts thereof.

2. The battery cell transfer tray of claim 1, wherein
the first side wall further comprises a first side wall reinforcing part thicker than a thickness of the first side wall between the plurality of opening handles.

3. The battery cell transfer tray of claim 1, wherein
the second side wall further comprises a second side wall reinforcing part thicker than a thickness of the second side wall between the plurality of opening handles.

4. The battery cell transfer tray of claim 1, wherein
the first side wall comprises a first coupling protruding part at an upper end thereof, and
the bottom part comprises, at a lower end thereof, a first coupling accommodating part having a shape that can be engaged with the first coupling protruding part.

5. The battery cell transfer tray of claim 4, wherein
the first coupling protruding part is formed as a step in which an inner peripheral surface thereof is lower than an outer peripheral surface of an upper surface of the first side wall, and
the first coupling accommodating part is formed as a step in which an inner peripheral surface thereof is higher than an outer peripheral surface of a lower surface of the bottom part.

6. The battery cell transfer tray of claim 1, wherein
the second side wall comprises a second coupling protruding part at an upper end thereof, and
the bottom part comprises, at a lower end thereof, a second coupling accommodating part having a shape that can be engaged with the second coupling protruding part.

7. The battery cell transfer tray of claim 6, wherein
the second coupling protruding part is formed as a step in which an inner peripheral surface is lower than an outer peripheral surface of an upper surface of the second side wall, and
the second coupling accommodating part is formed as a step in which an inner peripheral surface is higher than an outer peripheral surface of a lower surface of the bottom part.

8. The battery cell transfer tray of claim 2, wherein
the first side wall reinforcing part comprises a first sub-coupling protruding part at an upper end thereof, and
the bottom part comprises, at a lower end thereof, a first sub-coupling accommodating groove having a shape that can be engaged with the first sub-coupling protruding part.

9. The battery cell transfer tray of claim 2, wherein
the second side wall reinforcing part comprises a second sub-coupling protruding part at an upper end thereof, and
the bottom part comprises, at a lower end thereof, a second sub-coupling accommodating groove having a shape that can be engaged with the second sub-coupling protruding part.

10. The battery cell transfer tray of claim 1, wherein
the bottom part, the first side wall, the second side wall, and the reinforcing side walls constitute an outer frame, and
an inner frame capable of aligning the battery cells is installed at the bottom part of the outer frame.

11. The battery cell transfer tray of claim 10, wherein
outer surfaces of the outer frame are provided with a plurality of lattice-patterned reinforcing ribs.

12. The battery cell transfer tray of claim 10, wherein
the outer frame is manufactured as a single injection-molded product.

13. The battery cell transfer tray of claim 10, wherein
both side faces of the outer frame defined by the first side wall, the second side wall, and the reinforcing side walls are open.

14. The battery cell transfer tray of claim 1, wherein
a height of the reinforcing side walls is lower than a distance from electrodes of the battery cell to the bottom part.

15. The battery cell transfer tray of claim 1, wherein
the bottom part comprises a plurality of opening parts.
